# EUROPEAN PATENT APPLICATION

(11) **EP 4 436 036 A1**
(43) Date of publication of application: **25.09.2024**
(21) Application number: 24165857.4
(22) Date of filing: 25.03.2024
(51) Int. Cl.: H02S 20/23, E04D 13/147, E04G 21/32, F24S 25/00, F24S 25/61

(54) **FASTENING BRACKET FOR ATTACHING EQUIPMENT ON A ROOF**

(30) Priority: 23.03.2023 FI 20235341
(71) Applicant: VILPE Oy, 65610 Mustasaari (FI)
(72) Inventor: SAIKKONEN, Eero, 665610 Mustasaari (FI); LAHTI, Veli-Pekka, 65610 Mustasaari (FI)
(74) Representative: Laine IP Oy

(57) **Abstract**

According to an example aspect of the present invention, there is provided a bracket for attaching equipment on a roof, comprising: a plate (1) having a first surface (3) and a second surface (4), a body (2) placed on the second surface (4) and extending from it and having a top face (5), and at least one fastener (7, 8) for holding equipment (18, 21, 24). The body (2) has a cavity (6) within and the first surface (3) of the plate (1) forms at least partially a planar face (11) facing in opposite direction to the second surface (4). The planar face (11) is covered with a felt (15) permanently fixed thereto.

## Description

### FIELD

The invention relates to installing various equipment and devices on a roof. In particular, the invention relates to installing equipment on a roof covered with a roofing felt.

### BACKGROUND

Increasing use of solar panels is leading to increasing use of roof space. Also, other installations on roof are used for various purposes, for example catwalks, cable ways, antennae, cameras and such. This increases demand of reliable fastening methods for providing such installations. As the main function of a roof is to prevent entering of water in the space under the roof, no installation or fastening means may endanger water tightness of the roof surface even under prolonged use under stress. Any penetrating fasteners have to be sealed, the structure has to be sturdy enough to withstand stresses and forces caused by wind, ice, snow, and water on the structures fastened on the roof by fastening brackets or other fastening means. One method is to use penetrating bolts or screws for fixing brackets on the frame or girders of the roof. As the frame is under the surface of the roof that provides the shield against water, such as a roofing sheet or roofing felt, that surface has to be penetrated for fixing to the girders. The penetration makes a hole in the surface and has to be sealed to prevent leaks. However, the installation and sealing work has to be done carefully without endangering water tightness of the roof surface. Another risk related penetrating installations is movement of the fixing elements caused by the forces on the elements installed on the roof. For example, wind loads on solar panels cause long-term movement that may loosen the fixing elements and seals causing leaks on the roof.

Some examples of fastening brackets are disclosed in WO 2009095274, US 5217191 and SE 520398.

Installing any structures on a roof is demanding work that has to be planned and performed carefully. The work takes time may require using expensive special parts. All parts used have to withstand harsh conditions on the roof for a long time of use.

### SUMMARY OF THE INVENTION

The invention is defined by the features of the independent claims. Some specific embodiments are defined in the dependent claims.

According to a first aspect of the present invention, there is provided a bracket for attaching equipment on a roof, comprising:
- a plate having a first surface and a second surface;
- a body placed on the second surface and extending from it and having a top face;
- at least one fastener for holding equipment; wherein
- the body has a cavity within;
- the first surface of the plate forms a planar face facing in opposite direction to the second surface; and
- the planar face is fixedly covered with a felt.

According to a second aspect of the present invention, there is provided a method for mounting a bracket on a roof covered with roofing felt, comprising using a bracket with:
- a plate having a first surface and a second surface;
- a body placed on the second surface and extending from it and having a top face;
- at least one fastener for holding equipment; wherein
- the body has a cavity within;
- the first surface of the plate forms a planar face facing in opposite direction to the second surface; and
- the planar face is covered with a felt permanently fixed thereto.
wherein the method at least one of the felt or a surface of a roof is heated to melt heat meltable fixing agent whereafter the felt of the bracket is pushed on the surface of the roof.

According to a third aspect of the invention, the cavity of the body opens on the planar face to provide access inside the cavity.

According to a fourth aspect of the invention, the top face of the body comprises at least one hole and the fastener extends through the hole from the cavity.

According to a fifth aspect of the invention, the bracket comprises at least two mounting bolts extending from the cavity to the top face of the body.

According to a sixth aspect of the invention, the bracket comprises a cover plate extending over an opening formed on the planar face by the cavity.

According to a seventh aspect of the invention, the cover plate and the first surface are configured to form a uniform planar surface.

According to an eighth aspect of the invention, the cover plate comprises at least one reinforcing rib configured to extend against a counter surface in the body.

According to a ninth aspect of the invention, the felt includes heat melt fixing agent.

According to a tenth aspect of the invention, the body comprises at least one socket with a hole extending through the socket and through the bracket.

According to an eleventh aspect of the invention, the body comprises several sockets.

According to a twelfth aspect of the invention, the sockets extend above the second surface.

According to a thirteenth aspect of the invention, the sockets comprise caps.

According to the fourteenth aspect of the invention, the sockets comprise a counterbore to accommodate a head of a securing bolt.

### BRIEF DESCRIPTION OF THE DRAWINGS

FIGURE 1 illustrates a bracket in accordance with at least some embodiments of the present invention;
FIGURE 2 is a cross section of the bracket in FIGURE 1;
FIGURE 3 shows a part of the bracket in side and top view;
FIGURE 4 is a bottom view of the bracket in FIGURE 1;
FIGURE 5 is a perspective view of the bracket in FIGURE 1;
FIGURE 6 shows the bracket of FIGURE 1 with a cable tray;
FIGURE 7 shows the bracket of FIGURE 1 with a catwalk;
FIGURE 8 shows the bracket of FIGURE 1 with a catwalk for a sloping roof;
FIGURE 9 shows a second type of a bracket in one assembly;
FIGURE 10 shows the bracket of figure 9 in another variation of assembly

### EMBODIMENTS

### DEFINITIONS

In the present context, the term "roofing felt" comprises roofing and waterproofing materials made of fibrous body and at least one waterproofing additive acting also as adhesive. The adhesive material is often based on bitumen. The fibrous component is either organic or inorganic fibre or mixtures thereof.

The noun roof is considered to include roofs as such or any mostly flat covering structures.

The heat melt fixing agent is agent that comprises at least one substance that can be activated by melting the substance by heating. The setting of the heat melt fixing agent occurs when the substance or substances activated cools and causes fixing action.

The bracket described herein is for making attachment base for various equipment that may be installed on a roof. These are, for example, solar panels, catwalks, cable trays, antennae or similar equipment placed of a roof. The bracket includes a flat planar surface that is covered with a felt for attaching on a roof surface, especially on a roof covered with a roofing felt. A body extends from the plate forming the planar surface in order to distance a fastener mounted on the body away from the roof surface for providing a mounting point for equipment to be installed.

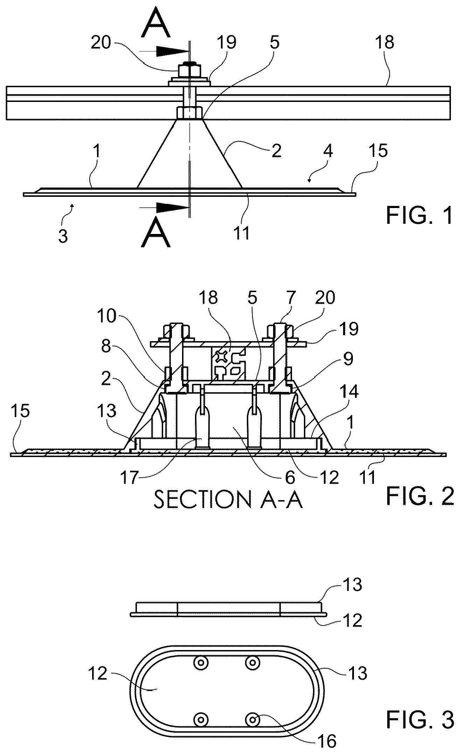

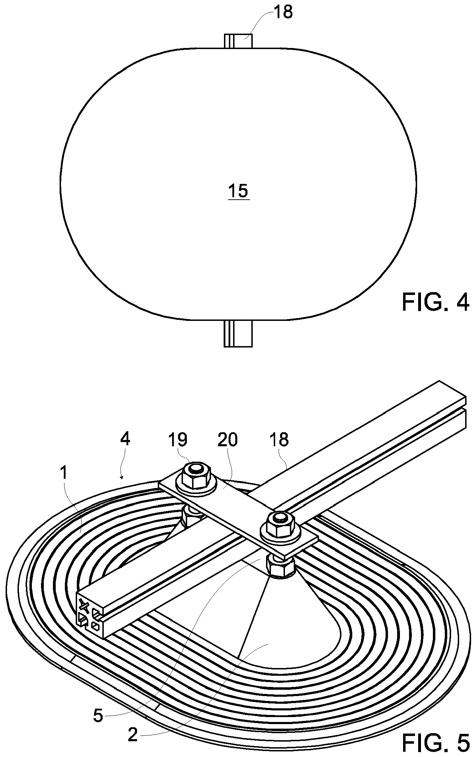

FIGURES 1 - 5 illustrate a bracket in accordance with at least some embodiments of the present invention. The bracket comprises a plate 1 having a first surface 3 and a second surface 4. The plate 1 is an oval having said first and second surface 3, 4 facing back-to-back to opposite directions. The surfaces 3, 4 are herein ribbed for enhancing attachment of felt material on them. The actual shape of the plate may vary from oval, it may be square or round, for example, and the ribbing may be omitted or replaced with another pattern. A body 2 is formed on the second surface 4 and extends from it. In this example, the body 2 has a shape of a sideways-extended pyramid having angled slopes rising from the second surface 4. The slopes end up to a flat peak forming a top face 5. On the top face 5 is at least at least one fastener for holding equipment to be fastened or mounted.

The body 2 has a cavity 6 within. The body forms a shell enveloping the cavity 6. The cavity 6 opens to the first surface 3 and the first surface 3 forms a rim around the opening of the cavity 6. The opening of the cavity 6 provides access inside the cavity 6. This enables mounting of bolts 7 through the opening. On the side facing the cavity 6, the body 2 has seats 8 for bolts. The seats 8 open as holes in the top face 5 so that the stems of the bolts are set through the holes and the heads 9 of the bolts 7 are placed in the seats 8. The bolts 7 are fastened to the top face 5 and the body by locking nuts 10. This structure enables assembly of the bracket by placing the bolts 7 through the cavity 6.

The first surface 3 of the plate 1 forms part of a planar face 11 facing in opposite direction to the second surface 4. The opening of the cavity 6 forms a hole on this planar face 11. The hole decreases the surface are of the planar face 11 which decreases the load carrying capacity of the bracket as load carrying area is smaller. Therefore, a cover plate 12 is used to close the open hole. The cover plate 12 can be omitted, if the area of the rim formed by the first surface 3 is considered to provide a load carrying area large enough. In such case, the rim forms the planar face 11. The cover plate 12 closes the opening and the cover plate 12 and the rim form the whole planar face in this case. In order to transfer loads from the body 2 to the cover plate and from the cover plate to the body 2, the cover plate 12 comprises at least one reinforcing rib 13 configured to extend against a counter surface in the body 2. The counter surface is a shoulder 14 formed in the cavity 6 of the body 2. The idea of the rib and the shoulder is to strengthen the cover plate and transfer the loads. This can be done by plurality of forms, for example taps and holes, toothed rims, conical forms and such. For fastening to the body 2, the cover plate has screw holes 16 and the body 2 corresponding screw seats 17.

The planar face 11 is fixedly covered with a felt 15. As the second surface is formed to a planar face 12 by the rim and the cover plate 12 in this example, the felt is set fast and tidy over the planar face 12. At the edges the felt 15 extends slightly over the boundary of the plate 1. This allows working on the edge of the felt 15 when the bracket is mounted on a roof. The felt 15 is permanently fixed on the planar face 11. Thus, the felt 15 provides a solid fixing element. The felt may be roofing felt normally used in roofs. In such case, it can be fixed on the planar face by heating the bituminous additive of the felt. Alternatively, a felt having only fibrous body component could be used. Then the felt 15 would be attached by using a glue or similar fixing agent. Glue may be used in connection with the bituminous felt as well, if desired.

The bracket of FIGURE 1 has a fastener setup comprising two bolts set through the top face 5 of the body 2. This simple structure may be used in several ways. In FIGURES 1 - 5 the bracket is used for mounting a bracing bar 18. The bracing bar can be a bracing bar of a frame system of a solar panel, for example. The bracing bar 18 is placed on the top face 5 of the body 2 and a flat locking slat 19. The locking slat 19 is tightened on the bracing bar 18 by tightening the fastening screws 20 placed on bolts 7. The gap between the bolts is wide enough to allow mounting the bracing bar 18 in various positions. This makes mounting the brackets and equipment attached thereto easy as there is tolerance for mutual placement.

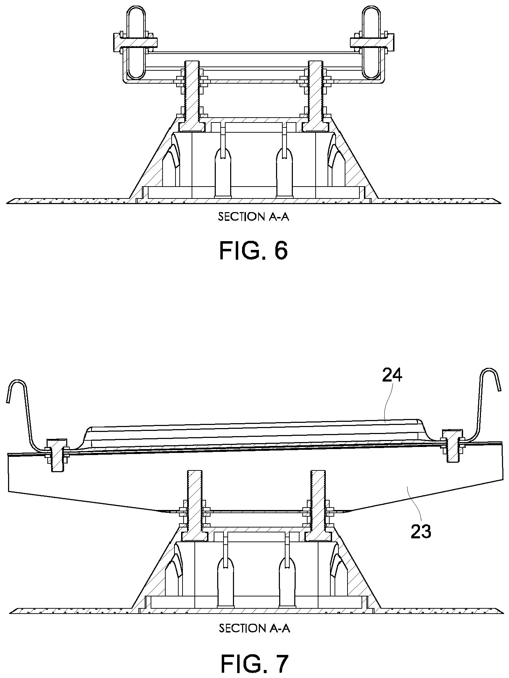

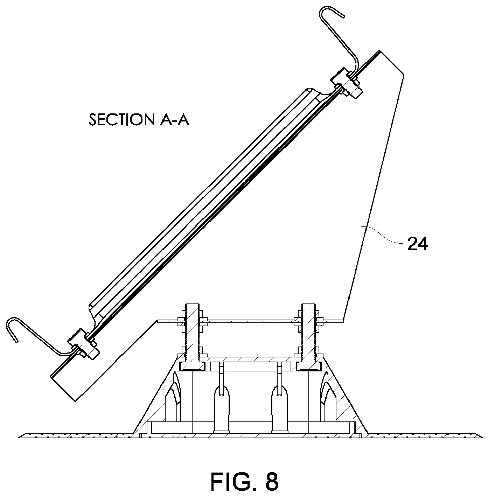

In FIGURE 6 the bracket is used for mounting a cable tray 21. In this case a U-support is attached on the bracket by using two nuts that hold the U-support 22. The ears of the U-support 22 are fixed on the frame of the cable tray 21 for a solid mount. The set-up with two nuts on each side of the U-support allow adjustment of the height and angle of the cable tray 21. FIGURE 7 shows a set-up for a catwalk or a walkway. The catwalk 24 is attached to the bracket by a flange support 24 having flanges for attachment to the bracket and to the catwalk 24. FIGURE 8 shows an alternative flange support 24 that has a triangular web plate. The triangular web plate set the flanges on an angle. This allows mounting the catwalk on a sloped roof so that the bracket follows the slope of the roof and the walking surface of the catwalk is set horizontally to provide a safe walkway. As the FIGURES 6 - 8 are used to show different equipment mounted on the bracket only, they do not show the felt 15. However, the felt may not be omitted.

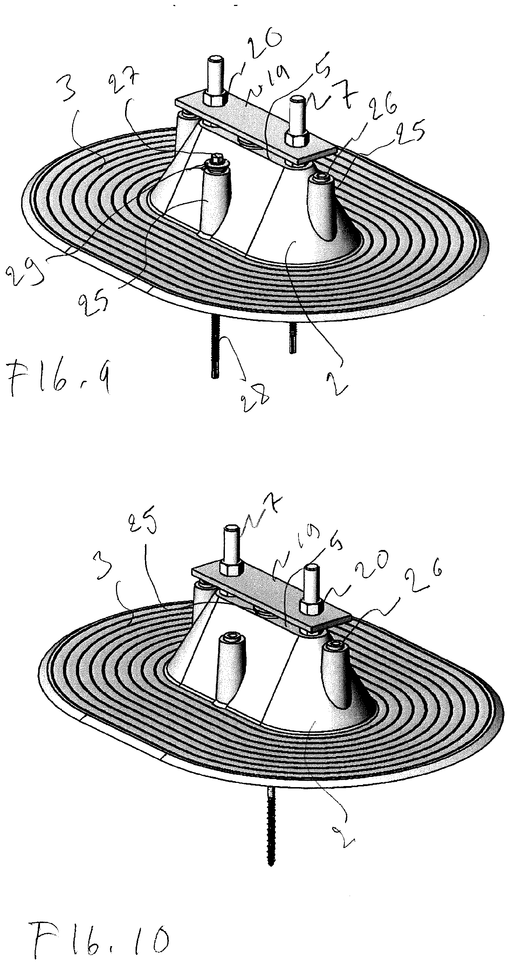

FIGURES 9 and 10 show a bracket having increased loading capacity. If the support surface on which the bracket is mounted is flexible, soft of otherwise yieldy or loads from the equipment are high, further securing of the bracket may be needed. Such loads may be caused by weight of the equipment, wind loads, snow and such. The securing is made on the structure of the roof or other surface the bracket is mounted on. In practise these strutures are girders, support beams of the roof or other load bearing structure supporting the weatherproofing layer of the roof. The materials of these support structures are most commonly wood, metal or concrete, but the securing method is not selective of the material.

The securing is done by securing bolts 28. These are bolts suitable for attachment on the material used for supporting structures of the roof and can be chosen accordingly. The body has five (in this example) sockets 25 for receiving the securing bolts 28. One socket 25 is place on the outside wall of the body on its every side. These sockets 25 extend from the sloped wall of the body 2 as a pipe-like extensions. The tops of the sockets 25 are above the second surface 3. In this way the opening of the holes of the sockets 25 are set above the roof surface and above water running on the roof surface. Setting the openings on an elevated position prevents effectively entrance of water through the sockets 25.

One socket 25 is placed on the flat top face 5 of the body 2. Now, when a securing bolt 28 is placed on this socket 25, it is placed below the locking slat 19. In this cse the locking slat is et on top of the securing bolt 28. The securing bolt 28 is fastened in the supporting structure. In this way the securing bolt 28 carries effectively loads to the fastening point. This increases load ability of the bracket. The equipment the is to be carried by the bracket may be set directly on top of the securing bolt 28, but preferably the locking slat 19 is set to rest on the securing bolt 28 and a second locking slat is used for fastening the equipment between two slats.

A washer 29 can be used to spread load from head of a securing bolt on the top of the socket 25. Another function of the washer 29 is to seal the hole in the socket 25 from moisture. Such washers 29 are widely used and multiple choices are available. One possibility is to use penetrable caps 26 for sealing the tops of the sockets 25. In such case the securing bolts 28 are simply screwed through the caps 26 and the caps 26 provide a seal. The caps 26 are preferably used to seal the sockets 25 as any number of sockets 25 may be employed and others left unused. In that case caps 26 provide a seal and the holes in the unused sockets don't need to be plugged. Alternatively, the sockets may comprise a counterbore to accommodate the head of the securing bolt 27. In such case the cap 26 may be used to seal the counterbore after fitting the securing bolt 27 or the counterbore may be filled with sealing material. Sealing material may be used in the hole of the socket to further improve water tightness.

As one alternative, the socket may be partially solid so that the hole in it do not run wholly through it. This provides two functions. First, as the securing bolt is screwed through the material of the socket, threads are formed on the socket. This inscreases load bearing capacity in the longitudinal direction of the securing bolt 28. In this case the threads on the securing bolt must extend to the socket 25 when the securing bolt is fully mounted in the socket. If desired, a treaded support ring of metal or other durable material can be used in the socket 25 as an insert. A hole at least partially through the socket from top of it is feasible as guide to the securing bolt to prevent the bolt erring to side and through the wall of the socket.

The number of sockets in the above example is five. The number of sockets may be varied freely. The placement of sockets can also be varied, but the placement of figures 9 and 10 has some benefits. The central socket on the top face 5 has the benefits described above. The locations on the sides of the body 2 provide easy access as the sockets are not covered by locking slat 19.

The body of the bracket and the plate are one single piece manufactured of plastic by normal plastic casting methods, as well as the cover plate. Other parts are the felt and accessories such bolts of metal, or any suitable material. The seams, holes, bolts etc may be sealed or secured by glue or sealant, if so desired. The type of fasteners may be altered. The bolts may be replaced by fixed nuts and only one bolt or not may be provided. However, the structure having two bolts provides steady and flexible mount as described above, Further, clamps and such may be used but they are usually more complicated to build and use.

The mounting method of the bracket is simple. It involves measuring the correct place for the bracket, whereafter at least one of the felt surfaces of the roof or the felt is heated to melt the heat melt fixing agent, usually bitumen. If heating of the roof felt is sufficient to provide enough melted fixing agent, the felt of the bracket may be only fibre base without fixing agent. Also, bitumen or another fixing agent may be added either on the top of the roof or the felt to ensure fixing. However, the invention allows mounting without added substances, whereby method limited to heating one or two of the surfaces is preferable. After heating and melting the fixing agent, the bracket is pressed on the roof and let cool for setting the fixing agent. A piece of felt having a hole for the body can be set on top of the second surface so that it extends the edges of the felt. The piece of felt secures further the It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### INDUSTRIAL APPLICABILITY

The invention is suitable for mounting equipment on a roof.

### REFERENCE SIGNS LIST

- 1: plate
- 2: body
- 3: first surface
- 4: second surface
- 5: top face
- 6: cavity
- 7: bolt
- 8: seats
- 9: bolt head
- 10: locking nut
- 11: planar face
- 12: cover plate
- 13: rib
- 14: shoulder
- 15: felt
- 16: screw hole
- 17: screw seat
- 18: bracing bar
- 19: locking slat
- 20: fastening nut
- 21: cable tray
- 22: U-support
- 23: plate support
- 24: catwalk
- 25: socket

- 26: cap
- 27: head of securing bolt
- 28: securing bolt
- 29: washer

## Claims

1. A bracket for attaching equipment on a roof, comprising:
- a plate (1) having a first surface (3) and a second surface (4);
- a body (2) placed on the second surface (4) and extending from it and having a top face (5);
- at least one fastener (7, 8) for holding equipment (18, 21, 24) ;
wherein- the body (2) has a cavity (6) within; and
- the first surface (3) of the plate (1) forms at least partially a planar face (11) facing in opposite direction to the second surface (4);
**characterized in that**
- the planar face (11) is covered with a felt (15) permanently fixed thereto,
- the cavity (6) of the body (2) opens on the planar face (11) to provide access inside the cavity (6), and
- the top face (5) of the body (2) comprises at least one hole and the fastener extends through the hole from the cavity (6).

2. A bracket according to one of the claims 1, wherein the bracket comprises at least two mounting bolts (7) extending from the cavity (6) to the top face (5) of the body (2).

3. A bracket according to one of the claims 1 - 2 wherein the bracket comprises a cover plate (12) extending over an opening formed on the planar face (11) by the cavity (6).

4. A bracket according to one of the claims 1 - 3, wherein the cover plate (12) and the first surface (3) are configured to form a uniform planar surface.

5. A bracket according to one of the claims 1-4, wherein the cover plate (12) comprises at least one reinforcing rib (13) configured to extend against a counter surface in the body (2).

6. A bracket according to one of the previous claims, wherein the felt includes heat melt fixing agent.

7. A bracket according to one of the previous claims, wherein the body (2) comprises at least one socket (25) with a hole extending at least partially through the socket (25) and through the bracket.

8. A bracket according to the claim 7, wherein the body (2) comprises several sockets (25).

9. A bracket according to one of the claims 7-8, wherein the sockets (25) extend above the second surface (4).

10. A bracket according to one of the claims 7-9, wherein the sockets (25) comprise caps (26).

11. A bracket according to one of the claims 7 - 10, wherein the sockets (25) comprise a counterbore to accommodate a head (26) of a securing bolt (28).
